# EUROPÄISCHE PATENTSCHRIFT

(11) **EP 4 411 151 B1**
(45) Veröffentlichungstag und Bekanntmachung des Hinweises auf die Patenterteilung: **14.01.2026**
(21) Anmeldenummer: 24152921.3
(22) Anmeldetag: 19.01.2024
(51) Int. Cl.: F16B 5/06, B62D 65/16, B29C 45/16, F16B 5/02

(54) **VERSTELLELEMENT MIT DÄMPFENDER BEFESTIGUNGSHÜLSE SOWIE EIN INSTALLATIONS- UND EIN HERSTELLUNGSVERFAHREN DAFÜR**
ADJUSTMENT ELEMENT WITH DAMPING FASTENING SLEEVE, AND INSTALLATION AND PRODUCTION METHOD THEREFOR
ÉLÉMENT DE RÉGLAGE DOTÉ D'UN MANCHON DE FIXATION AMORTISSANT ET SON PROCÉDÉ D'INSTALLATION ET DE FABRICATION

(30) Priorität: 02.02.2023 DE 102023102634
(43) Veröffentlichungstag der Anmeldung: 07.08.2024
(73) Patentinhaber: Böllhoff Verbindungstechnik GmbH, 33649 Bielefeld (DE)
(72) Erfinder: Rabe, Thorsten, 32689 Kalletal (DE)
(74) Vertreter: HWP Intellectual Property

(56) Entgegenhaltungen:
- DE-A1- 102018 201 496
- DE-A1- 19 949 654
- US-A1- 2015 224 916

## Beschreibung

### 1. Gebiet der Erfindung

Die vorliegende Erfindung betrifft ein Verstellelement, mit dem eine Komponente befestigbar und im Raum positionierbar ist. Des Weiteren betrifft vorliegende Erfindung ein Installationsverfahren, mit dem ein Anbauteil mithilfe des Verstellelements an einem Strukturbauteil befestigbar ist. Neben der Befestigung ermöglicht das Verstellelement gleichzeitig eine Positionierung des Anbauteils im Verhältnis zum Strukturbauteil. Zudem umfasst die Erfindung ein Herstellungsverfahren für das Verstellelement.

### 2. Hintergrund der Erfindung

DE 10 2007 002 699 A1 beschreibt eine Befestigungseinrichtung für einen Kraftwagen. Diese Befestigungseinrichtung besteht aus einer Hohlschraube mit einem Außengewinde, die mithilfe eines Gewindebolzens in einer Befestigungsöffnung eines Strukturbauteils befestigt wird. Da der Innendurchmesser der Hohlschraube größer ist als ein Außendurchmesser der Befestigungsschraube, stellt diese Kombination aus Befestigungsschraube und Hohlschraube einen lateralen Toleranzausgleich zur Verfügung. Auf dem Außengewinde der Hohlschraube ist ein Verstellteil mit Innengewinde angeordnet. Durch Drehen des Verstellteils ist die axiale Position des Verstellteils auf der Hohlschraube veränderbar. Mit dem Verstellteil wiederum ist ein Anbauteil derart verbunden, dass zwar eine Rotation des Verstellteils möglich ist, nicht aber ein relativer Versatz zwischen Anbauteil und Verstellteil. Neben der Vielzahl der Bestandteile des Befestigungselements beansprucht die Kombination aus Verstellteil, Hohlschraube und Befestigungsschraube viel Platz, der im Kraftfahrzeug nur begrenzt zur Verfügung steht.

DE 10 2016 207 868 A1 beschreibt ein Montagemodul für eine Fahrzeugleuchte. Dieses Montagemodul setzt sich ebenfalls aus einer Hohlschraube mit einem Außengewinde zusammen. Während die Hohlschraube an einem Strukturbauteil befestigt wird, wird auf ihrem Außengewinde eine Leuchte angeschraubt. In Abhängigkeit von der Einschraubtiefe der Hohlschraube in das Leuchtengehäuse ist die axiale Position der Leuchte in Bezug auf die Hohlschraube einstellbar. Innerhalb der Hohlschraube ist über eine axial feste Drehverbindung eine Befestigungshülse angeordnet. Diese Befestigungshülse stellt eine Befestigungsöffnung bzw. einen Befestigungskanal zur Verfügung, welcher von dem Schaft eines Gewindebolzens durchlaufen wird. Der Gewindebolzen wiederum dient der Befestigung der Hohlschraube an einem Strukturbauteil mithilfe der Befestigungshülse. Während die Befestigungshülse fest am Strukturbauteil verschraubt wird, gewährleistet die axial feste Drehverbindung zwischen Befestigungshülse und Hohlschraube ein Drehen der Hohlschraube trotz Befestigung der Befestigungshülse am Strukturbauteil. Diese axial feste Drehverbindung zwischen Befestigungshülse und Hohlschraube ist relativ aufwendig, da sie trotz der bereitzustellen Bewegbarkeit der Hohlschraube eine ausreichende mechanische Stabilität zum Befestigen der Fahrzeugleuchte über die Lebensdauer des Fahrzeugs bereitstellen muss. Zudem muss über die axial feste Drehverbindung der Abstand zwischen Hohlschraube und Strukturbauteil derart eingestellt sein, dass die Hohlschraube ohne Weiteres drehbar angeordnet ist. Diese erforderliche Genauigkeit stellt hohe Ansprüche an die Herstellung des Montagemoduls im Vergleich zu ähnlichen Konstruktionen des Standes der Technik.

WO 2019/110366 beschreibt ein ähnliches Befestigungsmodul für eine Fahrzeugleuchte wie die zuvor diskutierte DE 10 2016 207 868 A1. Hier wird ebenfalls die Leuchte über ein Außengewinde der Hohlschraube befestigt. Die Hohlschraube wiederum ist an einer Befestigungsöffnung eines Strukturbauteils festgelegt. Zu diesem Zweck weist die Hohlschraube an ihrem dem Strukturbauteil zugewandten axialen Ende eine Lochscheibe auf. Diese Lochscheibe hat eine zentrale Öffnung, die von einem Gewindebolzen durchlaufen werden kann. Zudem ist die Lochscheibe im Inneren der Hohlschraube in einer umlaufenden Nut an einer axial festen Position gehalten. Die Kombination aus Nut und Lochscheibe ermöglicht einen lateralen Versatz, um mögliche Toleranzen zwischen der Hohlschraube und der Befestigungsöffnung im Strukturbauteil ausgleichen zu können. Zur Festlegung des Gewindebolzens, der die Lochscheibe durchläuft, ist in einer Befestigungsöffnung des Strukturbauteils eine Blindnietmutter vorgesehen. In diese Blindnietmuttern wird der Gewindebolzen eingeschraubt. Die Verbindung aus Lochscheibe und Hohlschraube stellt eine axial feste Positionierung der Hohlschraube bei gleichzeitiger Drehbarkeit um ihre Längsachse zur Verfügung. Somit ist es möglich, die Hohlschraube zu drehen, um eine axiale Positionierung der Leuchte auf dem Außengewinde der Hohlschraube zu verändern.

Ein weiteres Verstellelement wird durch DE 20 2007 016 945 U1 offenbart. Dieses Verstellelement befestigt ein Anbauteil im Raum und stellt gleichzeitig einen Toleranzausgleich in den drei Raumrichtungen x, y, z zur Verfügung. Zu diesem Zweck weist das Verstellelement eine Hohlschraube mit einem Innen- und einem Außengewinde auf. In die Hohlschraube ist eine Gewindehülse eingeschraubt, die mithilfe eines Gewindebolzens fest mit einem Strukturbauteil verschraubt werden kann. Da die Gewindehülse in ihrem Innendurchmesser größer ist als der Außendurchmesser des befestigenden Gewindebolzens, gewährleistet die Gewindehülse in Kombination mit der äußeren Hohlschraube einen seitlichen Toleranzausgleich. Ergänzend dazu lässt sich die auf der Gewindehülse angeordnete Hohlschraube axial durch Drehen verstellen, um eine axiale Position eines befestigten Anbauteils zu verändern. Zwar stellt dieses Verstellelement eine große Variabilität im Hinblick auf die Verstellmöglichkeiten in alle drei Raumrichtungen zur Verfügung, ist aber gleichzeitig aufgrund der Anzahl der Einzelteile aufwendig in der Produktion.

Eine andere Ausgestaltung eines Verstellelements ist in DE 10 2022 115 126 A1 beschrieben. Dieses Verstellelement befestigt beispielsweise ein Anbauteil an einem Strukturbauteil. Dazu wird eine Hohlschraube in ein Anbauteil eingeschraubt, welche im Inneren durch eine Montagehülse gehalten ist. Aufgrund der axialen und radialen Dimensionierung der Montagehülse ist trotz Befestigung der Hohlschraube am Strukturbauteil ein Drehen der Hohlschraube möglich. Da die Montagehülse in ihrem Innendurchmesser größer ist als ein Außendurchmesser eines diese durchgreifenden Gewindebolzens, ist ein seitlicher Toleranzausgleich der Hohlschraube gewährleistet.

Ein weiteres Verstellelement ist aus der US 2015/0224916 A1 bekannt.

Es ist die Aufgabe vorliegender Erfindung, ein alternatives und strukturell einfaches Verstellelement bereitzustellen, welches eine verlässliche Installation eines Anbauteils an einem Strukturbauteil gewährleistet.

### 3. Zusammenfassung der Erfindung

Die obige Aufgabe wird gelöst durch ein Verstellelement gemäß dem unabhängigen Patentanspruch 1, ein Strukturbauteil in Kombination mit dem Verstellelement gemäß dem unabhängigen Patentanspruch 8, durch ein Installationsverfahren eines Anbauteils an einem Strukturbauteil mit Hilfe des Verstellelement gemäß dem unabhängigen Patentanspruch 10 sowie durch ein Spritzgussverfahren zur Herstellung des Verstellelements gemäß dem unabhängigen Patentanspruch 14. Vorteilhafte Ausführungsformen und Weiterentwicklungen vorliegender Erfindung ergeben sich aus der nachfolgenden Beschreibung, den Zeichnungen sowie den anhängenden Patentansprüchen.

Mit dem erfindungsgemäßen Verstellelement ist eine Komponente befestigbar und im Raum positionierbar. Positionierbar bedeutet, dass die Komponente im befestigten Zustand des Verstellelements in axialer Richtung des Verstellelements durch Drehen einer Hohlschraube auf der Hohlschraube versetzbar ist. In gleicher Weise ist es bevorzugt, Hohlschraube und Komponente, vorzugsweise ein Anbauteil, relativ zueinander zu versetzen, bevor das Verstellelement an einem weiteren Bauteil, beispielsweise ein Strukturbauteil, befestigt wird. Dadurch wird ein Abstand zwischen Komponente und Strukturbauteil geändert oder voreingestellt. Dass erfindungsgemäße Verstellelement weist die folgenden Merkmale auf: eine hülsenartige Hohlschraube mit einem ersten und einem zweiten axialen Ende, einem Antriebsmerkmal und einem Außengewinde, an dem eine Komponente haltbar und in axialer Richtung der Hohlschraube positionierbar ist, eine rohrförmige Befestigungsöffnung erstreckt sich zwischen dem ersten und dem zweiten axialen Ende der hülsenartigen Hohlschraube, innerhalb der rohrförmigen Befestigungsöffnung ist eine dämpfende Befestigungshülse angeordnet, sodass die Hohlschraube über die Befestigungshülse mit einem Befestigungsmittel an einem Bauteil befestigbar und Schwingungen zwischen dem Bauteil und der Hohlschraube reduzierbar sind.

Erfindungsgemäß bevorzugt besteht das Verstellelement aus der hülsenartigen Hohlschraube. Diese weist an ihrer Außenseite ein Außengewinde auf, welches in einer Komponente, beispielsweise ein Anbauteil wie eine Fahrzeugleuchte oder eine Griffkonstruktion, durch Einschrauben in eine entsprechende Öffnung befestigbar ist. Dafür eignet sich beispielsweise als Außengewinde ein selbstfurchendes oder selbsthemmendes Gewinde. Natürlich ist es ebenfalls bevorzugt, andere Gewindeformen einzusetzen, die einen verlässlichen Halt zwischen der Hohlschraube und dem Anbauteil gewährleisten.

Das sich entlang der Längsachse der Hohlschraube erstreckende Außengewinde an der Außenseite gewährleistet mithilfe des Drehens der Hohlschraube eine Positionierbarkeit des Anbauteils in axialer Richtung der Hohlschraube bzw. des Verstellelements. Auch nach der Installation oder Befestigung des Verstellelements an einem Strukturbauteil, beispielsweise einer Fahrzeugkarosserie, ermöglicht die bevorzugte Art der Befestigung der Hohlschraube ein Drehen der Hohlschraube um deren Längsachse. Gleichzeitig ist die Position der Hohlschraube festgelegt, sodass lediglich ein axialer Freiheitsgrad für die Drehung der Hohlschraube besteht.

Vorzugsweise wird diese Funktion des Verstellelements durch eine zentral im Verstellelement angeordnete Befestigungshülse realisiert. Dazu stützt sich die Befestigungshülse bevorzugt axial einseitig außen an der Hohlschraube ab. Gegenüber der axialen Abstützung der Befestigungshülse an der Hohlschraube werden Hohlschraube und Befestigungshülse bevorzugt über ein Befestigungsmittel, vorzugsweise ein Gewindebolzen, an einem Strukturbauteil oder allgemein an einem weiteren Bauteil befestigt. Das Befestigungsmittel durchläuft zu diesem Zweck eine durchgehende Befestigungsöffnung der Befestigungshülse. Der Gewindebolzen wird ebenfalls in einer Gewindeöffnung des Strukturbauteils, hier vorzugsweise die Fahrzeugkarosserie, eingeschraubt oder befestigt. Es ist ebenfalls bevorzugt, einen Blindniet, einen Rastbolzen oder ähnliches als Befestigungsmittel zu nutzen, die in einer Befestigungsöffnung des Strukturbauteils gehalten sind.

Vorzugsweise steht die Innenseite der Hohlschraube in Kontakt mit einer mantelförmigen Außenseite der Befestigungshülse. Mögliche Schwingungen des Strukturbauteils übertragen sich aufgrund der Befestigung der Befestigungshülse an dem Strukturbauteil zunächst auf die Befestigungshülse und von dort auf die Hohlschraube und das verbundene Anbauteil. Die mögliche Schwingungsübertragung ist auch in entgegengesetzter Richtung denkbar. Um die Schwingungsübertragung in beide Richtungen zu reduzieren oder bevorzugt zu verhindern, ist die Befestigungshülse schwingungsdämpfend konfiguriert. Entsprechend ist bevorzugt an der Kontakt- oder Grenzfläche zwischen Befestigungshülse und Hohlschraube eine Schicht aus elastischem oder elastisch plastischem oder aus plastischem Material vorgesehen, die auftretende Schwingungen aufnehmen oder dämpfen kann.

Gemäß einer bevorzugten Ausführungsform des Verstellelements weist dessen dämpfende Befestigungshülse an einem ersten axialen Ende einen umlaufenden und auswärtsragenden Radialkragen auf, der über einen Innendurchmesser der rohrförmigen Befestigungsöffnung hinausragt, sodass die Befestigungshülse an dem ersten oder zweiten axialen Ende der Hohlschraube axial abstützbar ist.

Die Funktion des erfindungsgemäßen Verstellelements basiert maßgeblich auf der Kombination der hülsenartigen Hohlschraube und der dämpfenden Befestigungshülse. Die dämpfende Befestigungshülse hat im Querschnitt eine T-Form, sodass sie sich eingesteckt in die rohrförmige Befestigungsöffnung der Hohlschraube an einem der axialen Enden der Hohlschraube abstützt. Denn der auswärts ragende Radialkragen der Befestigungshülse ist in seinem Durchmesser größer ausgebildet als ein Innendurchmesser der Befestigungsöffnung der Hohlschraube. Dies gewährleistet, dass die Befestigungshülse nicht vollständig von der Befestigungsöffnung innerhalb der Hohlschraube aufgenommen werden kann. Vielmehr erzeugt der abstützende Radialkragen der Befestigungshülse eine in axialer Richtung der Hohlschraube wirkende formschlüssige Verbindung. Durch die bevorzugte Nutzung der zentral angeordneten Befestigungshülse ist es möglich, das Verstellelement über die Befestigungshülse an einem Strukturbauteil zu befestigen. Denn sobald die Befestigungshülse mit einem Befestigungsmittel an einem Strukturbauteil befestigt ist, wird auch die Hohlschraube in dieser Position am Strukturbauteil gehalten.

Vorzugsweise ist die dämpfende Befestigungshülse gemessen in Axialrichtung ohne Radialkragen länger als die rohrförmige Befestigungsöffnung ausgebildet, sodass die Hohlschraube an einem Strukturbauteil an der Befestigungshülse drehbar befestigbar ist.

Gemäß der oben beschriebenen weiteren bevorzugten konstruktiven Ausgestaltung der Befestigungshülse ist diese in ihrer axialen Länge beginnend an der Unterseite des Radialkragens länger ausgebildet als die rohrförmige Befestigungsöffnung der Hohlschraube. Mit anderen Worten liegt der Radialkragen an einem axialen Ende der Hohlschraube an, während das dem Radialkragen gegenüberliegende axiale Ende der Befestigungshülse aus der rohrförmigen Befestigungsöffnung der Hohlschraube hervor steht. Wird basierend auf dieser geometrischen Ausgestaltung das Verstellelement an einem Strukturbauteil mithilfe des Befestigungsmittels befestigt, so gewährleistet eine Blockverschraubung der Befestigungshülse mit dem Strukturbauteil weiterhin ein Drehen der Hohlschraube auf der dämpfenden Befestigungshülse.

In einer bevorzugten Ausführungsform vorliegender Erfindung weist die dämpfende Befestigungshülse an einer radial äußeren Mantelfläche eine erste elastische Dämpfungsschicht auf, um eine Schwingungsübertragung zwischen der Hohlschraube und der Befestigungshülse zu vermindern.

Aufgrund der bevorzugten Anordnung der Befestigungshülse innerhalb der rohrförmigen Befestigungsöffnung der Hohlschraube bildet sich bevorzugt eine Kontaktfläche zwischen diesen beiden Bauteilen aus. Im Speziellen grenzt eine radial äußere Mantelfläche der Befestigungshülse an eine umlaufende innere Begrenzungswand der rohrförmigen Befestigungsöffnung der Hohlschraube an. In einem bevorzugten Verbund eines Anbauteils mit einem Strukturbauteil basierend auf der Wirkung des Verstellelements ist es in der Praxis häufig der Fall, dass Schwingungen des Anbauteils oder des Strukturbauteils auftreten und sich jeweils auf das andere Teil übertragen. Es ist ebenfalls möglich, dass sowohl das Strukturbauteil als auch das Anbauteil Schwingungen ausgesetzt sind, die sich auf das jeweils andere Teil übertragen. Derartige Schwingungen haben meist einen negativen Effekt auf die hergestellte Verbindung, die Lebensdauer des Anbauteils oder auch die Lebensdauer des Strukturbauteils oder einer Verbindung mit dem Strukturbauteil. Daher ist es wünschenswert, dass eine Übertragung von Schwingungen zwischen dem Anbauteil und dem Strukturbauteil weitestgehend vermieden wird.

Zu diesem Zweck nutzt vorliegende Verbindung vorzugsweise eine Dämpfungsschicht, die auf die äußere Mantelfläche der Befestigungshülse, im Speziellen bevorzugt auf dem Schaft der Befestigungshülse, aufgebracht ist. Diese bevorzugte elastische Dämpfungsschicht ist aufgrund der Konstruktion von Befestigungshülse und rohrförmiger Befestigungsöffnung der Hohlschraube in einem Bereich angeordnet, wo die Befestigungshülse an die Innenwand der Befestigungsöffnung der Hohlschraube angrenzt bzw. diese kontaktiert. Aufgrund dieser Anordnung werden Schwingungen, die über die Hohlschraube und/oder die Befestigungshülse übertragen werden, gedämpft, indem sich die Dämpfungsschicht verformt.

Weiterhin bevorzugt ist ein Innendurchmesser der rohrförmigen Befestigungsöffnung kleiner als ein Außendurchmesser der dämpfenden Befestigungshülse mit elastischer Dämpfungsschicht, sodass die Befestigungshülse reibschlüssig in der rohrförmigen Befestigungsöffnung gehalten ist.

Zur bevorzugten Unterstützung der dämpfenden Wirkung der Dämpfungsschicht auf der Befestigungshülse ist der Innendurchmesser der rohrförmigen Befestigungsöffnung etwas kleiner ausgebildet als der Außendurchmesser der dämpfenden Befestigungshülse. Dies gewährleistet einen bevorzugten Presssitz der Befestigungshülse innerhalb der Befestigungsöffnung. Während der dadurch erzeugte Reibschluss zwischen der Befestigungshülse und der Hohlschraube den Verbund des Verstellelements unterstützt, wird ebenfalls für eine effektive Übertragung von möglichen Schwingungen in die Dämpfungsschicht gesorgt.

Gemäß einer bevorzugten Ausführungsform vorliegender Erfindung weist der Radialkragen an einer der Befestigungshülse zugewandten Seite eine zweite elastische Dämpfungsschicht auf, um eine Schwingungsübertragung in axialer Richtung zwischen der Hohlschraube und der Befestigungshülse zu reduzieren.

Wie oben bereits beschrieben worden ist, wird vorzugsweise die erste elastische Dämpfungsschicht auf der radial äußeren Mantelfläche der Befestigungshülse angeordnet. Aufgrund dieser Anordnung wird vorzugsweise die Dämpfung bzw. die Reduktion von Schwingungen in radialer Richtung der Befestigungshülse und/oder der Hohlschraube unterstützt. Natürlich ist es aufgrund des bevorzugten Presssitzes der Befestigungshülse innerhalb der rohrförmigen Befestigungsöffnung ebenfalls bevorzugt und möglich, dass Schwingungen in einer winkligen Ausrichtung zum Radius der Befestigungshülse reduziert werden.

Da es ebenfalls denkbar ist, dass in der Praxis Schwingungen in axialer Richtung der Befestigungshülse und/oder der Hohlschraube auftreten, wird bevorzugt eine zweite Dämpfungsschicht an der Seite des Radialkragens angeordnet, die dem Schaft der Befestigungshülse zugewandt ist. Diese bevorzugte zweite Dämpfungsschicht stützt sich in axialer Richtung an dem einen axialen Ende der Hohlschraube ab, wenn das Verstellelement mithilfe des Befestigungsmittels an dem Strukturbauteil befestigt ist. Dadurch werden Schwingungen in axialer Richtung des Verstellelements reduziert bzw. gedämpft.

In diesem Zusammenhang ist es weiterhin bevorzugt, die erste und die zweite Dämpfungsschicht als eine gemeinsame Dämpfungsschicht an der radialen Außenseite der Befestigungshülse und der dem Schaft zugewandten Unterseite des Radialkragens vorzusehen.

Vorzugsweise ist das Verstellelement über das Befestigungsmittel an einem Strukturbauteil befestigbar, dessen Außendurchmesser kleiner ist als ein Innendurchmesser der Befestigungshülse, um einen radialen Toleranzausgleich zwischen dem Verstellelement und dem Befestigungsmittel zu gewährleisten.

Nachdem die dämpfende Befestigungshülse über das Befestigungsmittel an dem Strukturbauteil befestigt worden ist, kann vorzugsweise die hülsenartige Hohlschraube gedreht werden, um das daran befestigte Anbauteil in axialer Richtung der Hohlschraube zu versetzen. Gleichzeitig ermöglicht die oben beschriebene bevorzugte Dimensionierung des Außendurchmessers des Befestigungsmittels und des Innendurchmessers der Befestigungshülse, dass die Befestigungshülse in radialer Richtung bezogen auf das Befestigungsmittel versetzt werden kann. Aufgrund dieser radialen Versetzbarkeit gewährleistet die Kombination aus Befestigungsmittel und Befestigungshülse einen Toleranzausgleich senkrecht zur Längsachse des Verstellelements. Durch die Kombination der oben genannten Toleranzausgleichsmöglichkeiten ist das Anbauteil mit einer gewissen Flexibilität frei im Raum anordenbar.

Vorliegende Erfindung umfasst zudem ein Strukturbauteil mit einer Befestigungsöffnung, an der das Verstellelement gemäß einer der oben beschriebenen Ausgestaltungen mit einem Befestigungsmittel befestigt ist.

Sofern unter einem ersten Bauteil oder oben genannten Anbauteil eine Griffkonstruktion einer Fahrzeugtür oder eine Fahrzeugleuchte oder dergleichen verstanden wird, wird das bevorzugte Strukturbauteil durch die Karosserie oder ein anderes tragendes Teil an einem Fahrzeug gebildet. In gleicher Weise ist es ebenfalls denkbar, dass allgemein unter einem Strukturbauteil ein tragendes Teil verstanden wird, an dem mithilfe des Verstellelements ein weiteres Bauteil befestigt wird. Derartige Bauteilkombinationen sind nicht auf den Fahrzeugbau beschränkt, sondern betreffen alle möglichen Konstruktions- und Lebensbereiche.

Vorzugsweise ist auf dem Außengewinde der Hohlschraube des Verstellelements ein Bauteil derart befestigt, dass Toleranzen zwischen dem Strukturbauteil und dem Bauteil einstellbar sind.

Vorliegende Erfindung umfasst zudem ein Installationsverfahren, mit dem ein Anbauteil, insbesondere eine Leuchte, an einem Strukturbauteil, insbesondere eine Fahrzeugkarosserie, befestigbar und positionierbar ist. Das Installationsverfahren weist die folgenden Schritte auf: Einschrauben einer Hohlschraube des Verstellelements gemäß einer der obigen Ausgestaltungen in eine Halteöffnung des Anbauteils, Drehen der am Strukturbauteil befestigten Hohlschraube, so dass das Anbauteil entlang einer Längsachse der Hohlschraube versetzt wird, und Befestigen der Hohlschraube mit Anbauteil an einer Befestigungsöffnung des Strukturbauteils mit einem Befestigungsmittel, das innerhalb der rohrförmigen Befestigungsöffnung der dämpfenden Befestigungshülse angeordnet ist.

Das erfindungsgemäße Installationsverfahren baut auf der platzsparenden und wirtschaftlichen Konstruktion des oben beschriebenen Verstellelements auf. Entsprechend wird es mit geringem Aufwand hergestellt und nachfolgend auch installiert. In einem ersten Schritt wird die bevorzugte Hohlschraube des Verstellelements in eine Halteöffnung des Anbauteils, vorzugsweise eine Griffkonstruktion, eingeschraubt. Nachfolgend wird die Hohlschraube in einer Gewindeöffnung des Strukturbauteils, vorzugsweise der Fahrzeugkarosserie, mithilfe eines Gewindebolzens befestigt. Die Gewindeöffnung besteht gemäß unterschiedlicher bevorzugte Ausführungsformen vorliegender Erfindung aus einer Bohrung mit Innengewinde, einer in einer Bohrung befestigten Blindnietmutter oder aus einer Schweißmutter, die angrenzend an eine Öffnung angeordnet ist. Durch die Gewindeverbindung der Hohlschraube mit dem Strukturbauteil mithilfe des Gewindebolzens wird die Positionierung des Anbauteils in Bezug auf das Strukturbauteil festgelegt. In dieser Befestigung zwischen Anbauteil und Strukturbauteil hat lediglich die Hohlschraube den Freiheitsgrad, sich zu drehen. Dieser Freiheitsgrad wird vorzugsweise mithilfe eines Werkzeugs genutzt, um einen Abstand zwischen dem Strukturbauteil und dem Anbauteil einzustellen. Entsprechend greift ein Werkzeug in die Hohlschraube ein oder an der Hohlschraube an und dreht diese um ihre Längsachse. Auf diese Weise wird das auf dem Außengewinde der Hohlschraube befestigte Anbauteil entlang der Längsachse der Hohlschraube versetzt, bis der passende Abstand zwischen Strukturbauteil und Anbauteil erreicht ist.

Zur weiteren bevorzugten Ausgestaltung des Installationsverfahrens umfasst es den weiteren Schritt: Bereitstellen der Befestigungsöffnung des Strukturbauteils mit einem Gewinde, vorzugsweise mittels einer Schweißmutter oder einer Blindnietmutter, welches passend zu einem Gewindebolzen als Befestigungsmittel ausgebildet ist.

Gemäß einer weiteren bevorzugten Ausführungsform des Installationsverfahrens ist als weiterer Schritt vorgesehen: Anordnen des Gewindebolzens in Kombination mit einer Stützscheibe in der dämpfenden Befestigungshülse, so dass die Hohlschraube am Strukturbauteil drehbar befestigt ist.

Vorzugsweise erfolgt zudem während des Installationsverfahrens ein Drehen der Hohlschraube über ein äußeres oder ein inneres Antriebsmerkmal, um die axiale Position des Anbauteils auf der Hohlschraube zu verändern.

Um das Anbauteil und die Hohlschraube relativ zueinander zu versetzen, weist die Hohlschraube vorzugsweise ein Antriebsmerkmal auf. Dieses kann radial außen aber auch radial innerhalb der Hohlschraube angeordnet sein. Als ein radial äußeres oder ein radial inneres Antriebsmerkmal eignet sich jede formschlüssige Verbindung, wie beispielsweise eine Mehrkantgestalt oder eine Schlitzgestalt, welche den Angriff eines passenden Werkzeugs gewährleistet.

Vorliegende Erfindung umfasst zudem ein Spritzgussverfahren, mit dem ein Verstellelement gemäß einer der obigen Ausgestaltungen herstellbar ist und das die folgenden Schritte aufweist: Bereitstellen einer Spritzgussform mit den komplementären Formmerkmalen zu dem Verstellelement, Spritzgießen der Hohlschraube und der Befestigungshülse mit einem ersten Kunststoff in einem ersten Schuss und Spritzgießen einer Dämpfungsschicht auf einer äußeren Fläche der Befestigungshülse mit einem zweiten Kunststoff in einem zweiten Schuss, wobei der zweite Kunststoff eine größere Elastizität oder Plastizität als der erste Kunststoff aufweist.

Ein 2-K-Spritzgussverfahren ist allgemein im Stand der Technik bekannt. Es wird hier angewandt, um zunächst die Hohlschraube und die daran angeordnete Befestigungshülse mit einem ersten Kunststoff spritzzugießen. Dieser erste Kunststoff zeichnet sich durch eine ausreichende Stabilität aus, um die Hohlschraube beispielsweise in einem Anbauteil über eine geeignete, beispielsweise eine selbsthemmende, Gewindeverbindung zu halten. Die Befestigungshülse dient gemäß obiger Beschreibung dem Befestigen des Anbauteils über das Verstellelement an einem Strukturbauteil. Entsprechend muss also auch der Kunststoff der Befestigungshülse eine ausreichende Stabilität für eine derartige Befestigung aufweisen.

In einem zweiten Schuss wird ein dämpfender Kunststoff in die Spritzgussform gespritzt, um eine dämpfende Kunststoffschicht auf der Befestigungshülse herzustellen. Als dämpfende Kunststoffschicht eignet sich beispielsweise ein Elastomer, welches unter der Einwirkung einer mechanischen Belastung elastisch nachgibt und auf diese Weise auftretende Schwingungen dämpft bzw. reduziert.

In diesem Zusammenhang ist es ebenfalls bevorzugt, als Dämpfungsschicht einen plastisch verformbaren Kunststoff in dem zweiten Schuss im Spritzgussverfahren zu verarbeiten. Vorzugsweise füllt die Dämpfungsschicht einen vorhandenen Spalt zwischen der Befestigungshülse und der benachbarten inneren Wand der rohrförmigen Befestigungsöffnung aus. Bei dem Auftreten mechanischer Belastungen zwischen der Befestigungshülse und der Hohlschraube verformt sich der plastisch verformbare Kunststoff und führt auf diese Weise zu einer Reduktion auftretender Schwingungen zwischen beiden Verbindungspartnern.

Gemäß einer bevorzugten Ausführungsform des Spritzgussverfahrens erfolgt das Spritzgießen der Dämpfungsschicht auf einer äußeren Mantelfläche der Befestigungshülse oder auf der äußeren Mantelfläche und einer der Mantelfläche zugewandten Seite des Radialkragens der Befestigungshülse.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine perspektivische Ansicht einer bevorzugten Ausführungsform des Verstellelements bestehend aus hülsenartiger Hohlschraube und einer dämpfenden Befestigungshülse angeordnet in der rohrförmigen Befestigungsöffnung ohne ein Befestigungsmittel,
- Figur 2: eine perspektivische Ansicht einer Explosionsansicht der Hohlschraube mit Befestigungshülse aus Figur 1, in der die Befestigungshülse nur an einer radialen Außenwand eines Schafts der Befestigungshülse über Teilflächen eine Dämpfungsschicht aufweist,
- Figur 3: Hohlschraube und Befestigungshülse aus Figur 2 während des Zusammenbaus,
- Figur 4: eine perspektivische Seitenansicht einer weiteren bevorzugten Ausführungsform der Hohlschraube mit Befestigungshülse, in der ein Radialkragen der Befestigungshülse an einer der Hohlschraube zugewandten Seite eine Dämpfungsschicht aufweist,
- Figur 5: eine perspektivische Seitenansicht einer weiteren bevorzugten Ausführungsform des Verstellelements mit Hohlschraube und Befestigungshülse, in der eine bevorzugte Dämpfungsschicht zwischen dem Radialkragen der Befestigungshülse und der Hohlschraube einen Anspritzansatz aus einem 2K-Spritzgussverfahren innerhalb des Radialkragen aufweist,
- Figur 6: eine perspektivische Darstellung einer bevorzugten Befestigungshülse mit durchgehender Befestigungsschicht,
- Figur 7: eine perspektivische Darstellung einer weiteren bevorzugten Ausführungsform des erfindungsgemäßen Verstellelements bestehend aus der Hohlschraube und der Befestigungshülse mit äußerer Dämpfungsschicht gemäß Figur 6,
- Figur 8: eine seitliche Schnittdarstellung einer bevorzugten Ausführungsform des Verstellelements mit Hohlschraube und Befestigungshülse, wie sie in Figur 5 gezeigt ist,
- Figur 9: eine seitliche Schnittdarstellung einer bevorzugten Ausführungsform des Verstellelements mit einem Anbauteil sowie angeordnet an einem bevorzugten Strukturbauteil,
- Figur 10: eine seitliche Schnittdarstellung einer bevorzugten Ausführungsform des Verstellelements mit einem an der Hohlschraube befestigten Anbauteil sowie einer Befestigung an einem Strukturbauteil mithilfe eines Befestigungsmittels, in dem die Befestigungshülse länger als die Hohlschraube ausgebildet ist,
- Figur 11: eine seitliche Schnittdarstellung einer bevorzugten Ausführungsform des Verstellelements mit einem an der Hohlschraube befestigten Anbauteil sowie einer Befestigung an einem Strukturbauteil mithilfe eines Befestigungsmittels, in dem die Befestigungshülse angrenzend an das Strukturbauteil gemeinsam mit der Hohlschraube endet,

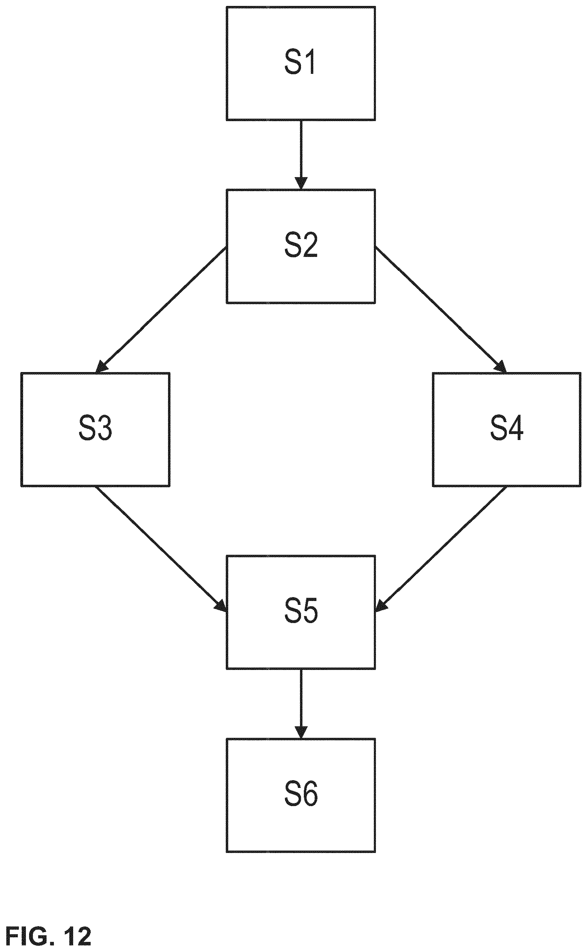

- Figur 12: ein Flussdiagramm einer bevorzugten Ausführungsform eines Installationsverfahrens und

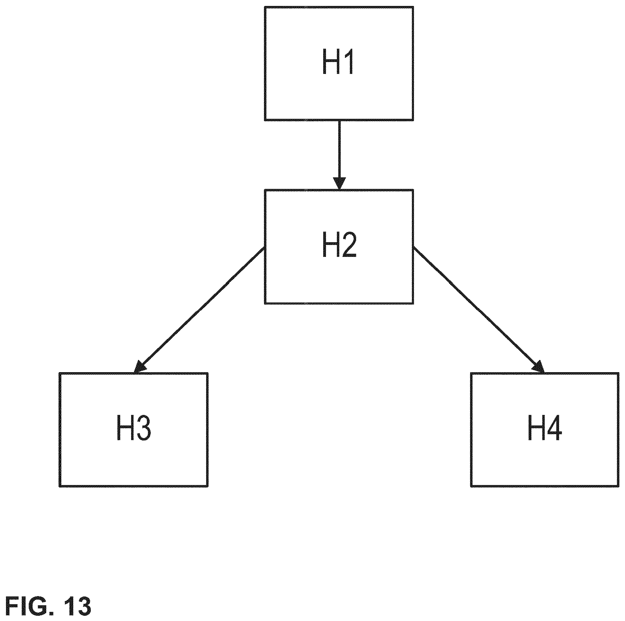

- Figur 13: ein Flussdiagramm einer bevorzugten Ausführungsform eines Herstellungsverfahrens des erfindungsgemäßen bevorzugten Verstellelements.

### 5. Detaillierte Beschreibung der bevorzugten Ausführungsformen

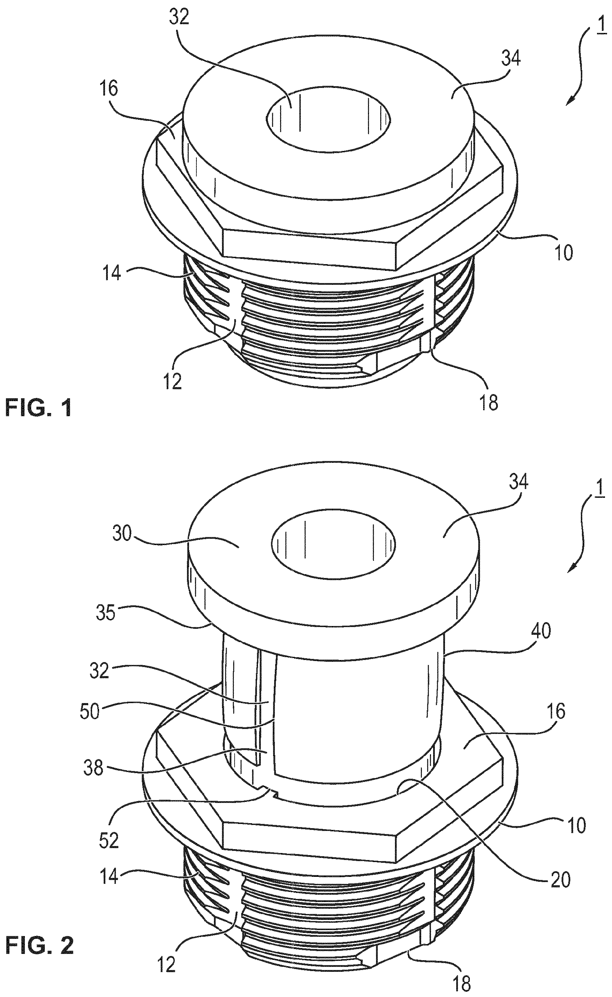

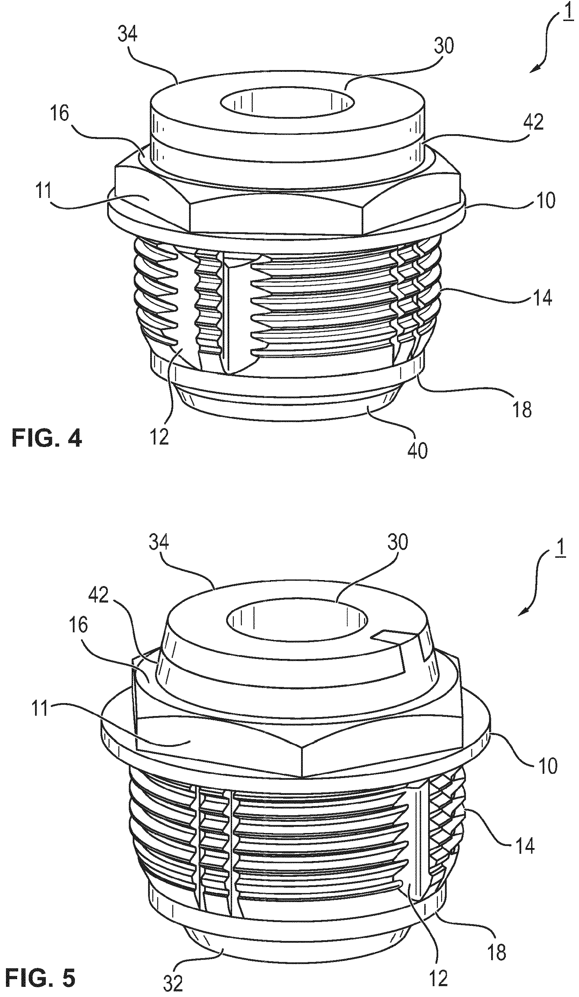

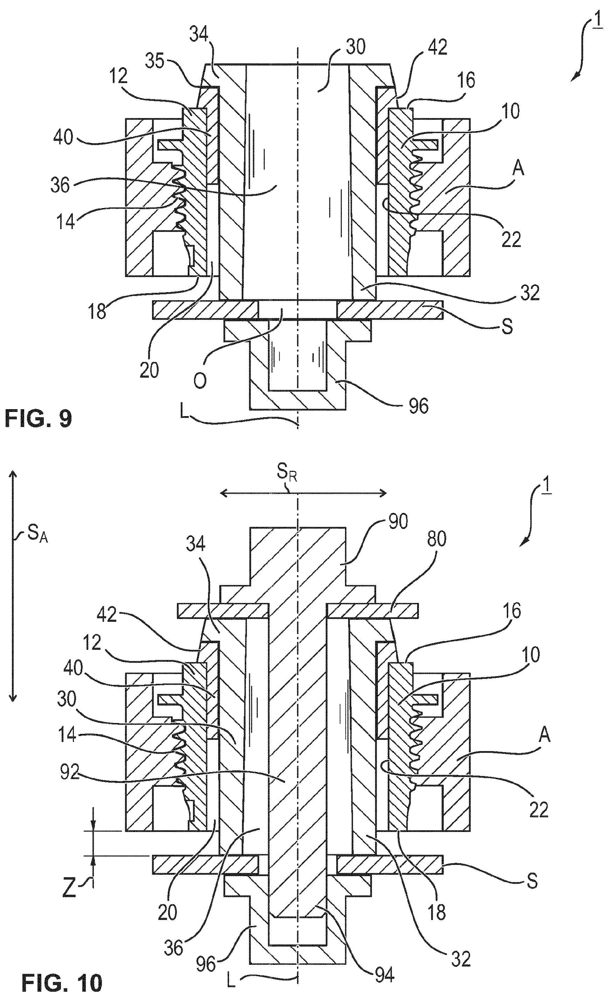

Figur 10 zeigt eine bevorzugte Ausführungsform einer Verbindung von einem Strukturbauteil S, vorzugsweise eine Fahrzeugkarosserie, mit einem Bauteil oder Anbauteil A, vorzugsweise ein Türgriff oder eine Fahrzeugleuchte. Das Strukturbauteil S und das Anbauteil A sind über ein erfindungsgemäßes Verstellelement 1 miteinander verbunden, welches in einer bevorzugten Ausführungsform in Figur 10 in einer Schnittdarstellung zu erkennen ist. Bevorzugte Ausführungsformen einzelner Bestandteile des Verstellelements 1 gehen aus den Figuren 1 bis 11 hervor.

Das Strukturbauteil S weist eine Befestigungsöffnung O auf. Die bevorzugte Befestigungsöffnung O wird gemäß einer bevorzugten Ausführungsform vorliegender Erfindung in Kombination mit einem Mutter-Gewindeelement wie eine Schweißmutter oder eine Blindnietmutter C mit Innengewinde (nicht gezeigt) oder durch ein integral ausgebildetes Gewinde direkt in der Befestigungsöffnung O im Strukturbauteil S bereitgestellt.

Es ist ebenfalls bevorzugt, das Strukturbauteil mit einer gewindelosen Öffnung vorzusehen. An dieser Öffnung lässt sich das Verstellelement 1 mit einem Blindniet, einer Steckverbindung, einer Bajonettverbindung, einem Raststift und ähnlichem befestigen.

Im Folgenden wird als beispielgebendes Befestigungsmittel ein Gewindebolzen 90 beschrieben.

Das bevorzugte Verstellelement 1 gemäß Figur 10 besteht aus einer hülsenartigen Hohlschraube 10. Die hülsenartige Hohlschraube 10 ist ähnlich einem Hohlzylinder geformt mit einer umlaufenden Wand 12. Die umlaufende Wand 12 weist an einer radialen Außenseite ein Außengewinde 14 auf. Mit dem Außengewinde 14 wird die Hohlschraube 10 und damit das Verstellelement 1 mit dem bevorzugten Anbauteil A verschraubt. Die Hohlschraube 10 wird bevorzugt über ein äußeres Antriebsmerkmal 11, vorzugsweise ein Mehrkant oder Sechskant, gedreht.

Vorzugsweise hat das Außengewinde 14 eine selbsthemmende Konfiguration. Die Hohlschraube 10 kann somit in einer Öffnung des Anbauteils A gedreht und damit axial verstellt werden, ohne dass sich die Gewindeverbindung zwischen der Hohlschraube 10 und dem Anbauteil A lockert.

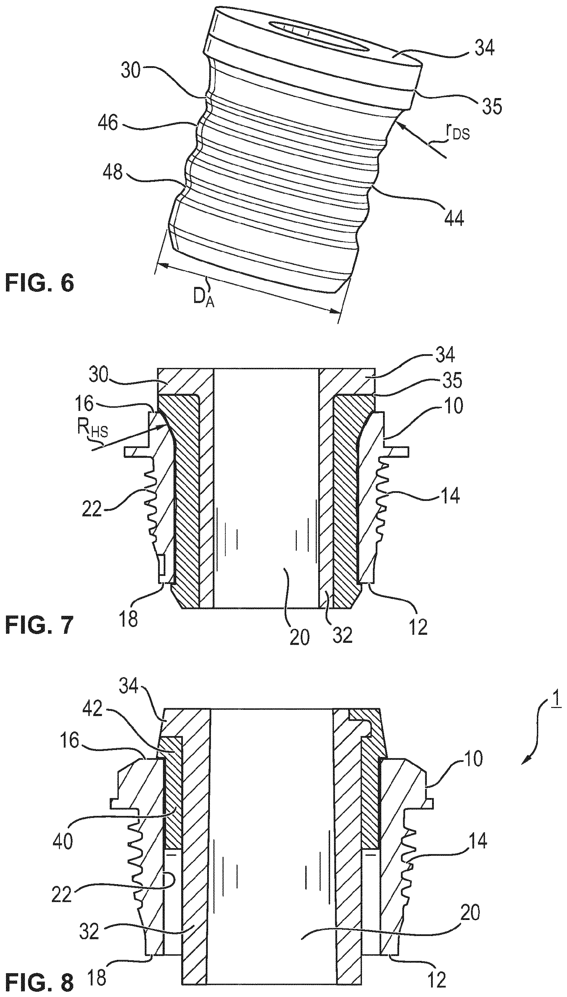

Die Gewindeverbindung zwischen der Hohlschraube 10 und dem Anbauteil A hat den Vorteil, dass ein Drehen der Hohlschraube 10 um deren Längsachse L das Anbauteil A relativ zur Hohlschraube 10 in Richtung der Längsachse L der Hohlschraube 10 versetzt. Auf diese Weise ist bevorzugt ein Abstand Z zwischen dem Anbauteil A und dem Strukturbauteil S veränderbar und einstellbar, wie Figur 8 zeigt.

Zu diesem Zweck ist die Hohlschraube 10 vorzugsweise um ihre Längsachse L drehbar am Strukturbauteil S befestigt. Die Befestigung ist unten näher erläutert.

Zwischen einem ersten 16 und einem zweiten axialen Ende 18 der Hohlschraube 10 erstreckt sich in deren Innerem eine rohrförmige Befestigungsöffnung 20. Die rohrförmige Befestigungsöffnung 20 weist vorzugsweise einen konstanten Innendurchmesser auf, der durch eine umfänglich umlaufende Begrenzungswand 22 festgelegt ist. Weiter bevorzugt ist die Begrenzungswand 22 glatt ausgebildet, um als Stützfläche zu dienen (siehe unten).

In der rohrförmigen Befestigungsöffnung 20 ist eine dämpfende, vorzugsweise eine schwingungsdämpfende, Befestigungshülse 30 angeordnet. Diese Befestigungshülse 30 weist einen Schaft 32 auf, von dem sich an einem ersten axialen Ende ein Radialkragen 34 radial auswärts erstreckt. Der Radialkragen 34 läuft vorzugsweise kontinuierlich umfänglich um den Schaft 32 um. Der Radialkragen 34 weist einen Außendurchmesser auf, der größer ist als ein Innendurchmesser der rohrförmigen Befestigungsöffnung 20. Ein Außendurchmesser des Schafts 32 ist kleiner als der Innendurchmesser der rohrförmigen Befestigungsöffnung 20. Ausgehend von dieser bevorzugten Konfiguration der Befestigungshülse 30 wird deren Schaft 32 in der rohrförmigen Befestigungsöffnung 20 aufgenommen, während sich der Radialkragen 34 an dem ersten axialen Ende 16 der Hohlschraube 10 abstützt.

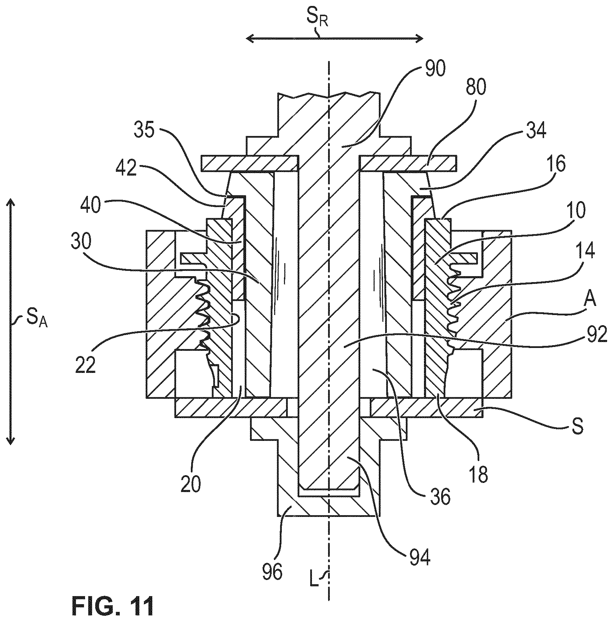

Der Schaft 32 der Befestigungshülse 30 weist eine durchgehende Öffnung 36 auf, in der ein Befestigungsmitteln 90, vorzugsweise ein Gewindebolzen, aufnehmbar ist (siehe Figuren 10 und 11).

Der Gewindebolzen 90 stützt sich vorzugsweise mit einem Bolzenkopf direkt oder über eine Unterlegscheibe 80 an dem Radialkragen 34 der Befestigungshülse 30 ab. Ein Gewindeende 94 eines Bolzenschafts 92 greift in ein Mutter-Gewindeelement 96 ein, um das Verstellelement 1 und damit das Anbauteil A an dem Strukturbauteil S zu befestigen. Zu diesem Zweck ist an einer Befestigungsöffnung O des Strukturbauteils S bevorzugt als Mutter-Gewindeelement 96 eine Blindnietmutter oder eine Schweißmutter oder eine lose Mutter oder ein Innengewinde in der Öffnung O vorgesehen.

Gemäß einer ersten bevorzugten Ausführungsform der Befestigungshülse 30 ragt der Schaft 32 über das zweite axiale Ende 18 der Hohlschraube 10 hinaus, wenn der Radialkragen 34 auf dem ersten axialen Ende 12 der Hohlschraube 10 aufliegt. Diese bevorzugte Gestaltung ist beispielsweise in Figur 10 gezeigt.

Durch die axiale Länge des Schafts 32 wird die Befestigungshülse 30 über den Gewindebolzen 90 vorzugsweise auf Block mit dem Strukturbauteil S verschraubt. Trotz der Blockverschraubung wird die Hohlschraube 10 nicht zwischen Strukturbauteil S und Kopf des Gewindebolzens 90 geklemmt und bleibt dadurch in ihrer Anordnung drehbar. Diese Art der Befestigung des Verstellelements 1 erhält die Drehbarkeit der Hohlschraube 10 und damit eine axiale Einstellbarkeit des an der Hohlschraube 10 über das Außengewinde 14 gehaltenen Anbauteils A.

Gemäß der bevorzugten Ausführungsform von Figur 11 endet die Befestigungshülse 30 bei Auflage des Radialkragen 34 auf dem ersten axialen Ende 16 der Hohlschraube 10 gemeinsam mit dem zweiten axialen Ende 18 der Hohlschraube 10. Nachdem das Verstellelement 1 mit Anbauteil A an dem Strukturbauteil es mithilfe des Befestigungsmittels 90 befestigt worden ist, werden die Hohlschraube 10 und die Befestigungshülse 30 gegen das Strukturbauteil S verklemmt. Damit ist die Hohlschraube 10 fest und nicht drehbar am Strukturbauteil S angeordnet.

Diese bevorzugte Ausgestaltung des Verstellelements 1 setzt voraus, dass zunächst das Anbauteil A in seiner axialen Position auf der Hohlschraube 10 eingestellt wird. Nach abgeschlossener Positionierung von Anbauteil A und Hohlschraube 10 relativ zueinander, wird die Hohlschraube 10 über die Befestigungshülse 30 und das Befestigungsmittel 90, vorzugsweise ein Gewindebolzen, am Strukturbauteil S starr befestigt. In diesem Fall ist der Abstand Z zwischen Hohlschraube 10 und Strukturbauteil S gleich null.

Gemäß einer bevorzugten Ausgestaltung vorliegender Erfindung bestehen die Hohlschraube 10 und die Befestigungshülse 30 aus einem stabilen Kunststoff, wie Polyamid (PA), Polycarbonat (PC), Polypropylen (PPH) mit oder ohne Glasfaserverstärkung (GF). Weiter bevorzugt sind die Hohlschraube 10 und die Befestigungshülse 30 aus dem gleichen Kunststoff hergestellt.

Gemäß einer weiteren bevorzugten Ausführungsform vorliegender Erfindung besteht die Befestigungshülse 30 aus Metall. Dies unterstützt vorzugsweise eine Blockverschraubung mit dem Strukturbauteil S, da Kunststoff bei mechanischer Belastung zum Fließen neigt.

Erfindungsgemäß ist die Befestigungshülse 30 dämpfend, bevorzugt schwingungsdämpfend, ausgebildet. Dämpfend bedeutet, dass die Befestigungshülse 30 an einer radialen 38 und/oder axialen Außenseite 35 mit einem elastisch und/oder plastisch verformbaren Material zumindest teilweise beschichtet ist. Die axiale Außenseite 35 wird durch die dem Schaft 32 zugewandte Seite des Radialkragens 34 gebildet. Die radiale Außenseite 38 ist die Außenseite des Schafts 36.

Gemäß der in Figur 2 gezeigten bevorzugten Ausführungsform der schwingungsdämpfenden Befestigungshülse 30 ist diese auf der radialen Außenseite 38 des Schaft 32 zumindest auf Teilflächen oder vollflächig mit einer Dämpfungsschicht 40 ausgestattet.

Ist die Dämpfungsschicht 40 gemäß einer bevorzugten Ausführungsform als zwei benachbarte Teilflächen ausgebildet (siehe Figur 2), wird zwischen den benachbarten Teilflächen der Dämpfungsschicht 40 eine Führungsnut 50 gebildet. Diese Führungsnut 50 ist vorzugsweise geeignet, um einen passenden Führungssteg 52 der Hohlschraube 10 aufzunehmen. Durch eine passende Anordnung von Führungssteg 52 und Führungsnut 50 lässt sich eine Relativdrehung zwischen der Hohlschraube 10 und der Befestigungshülse 30 vermeiden. Zudem werden vorzugsweise die Hohlschraube 10 und die Befestigungshülse 30 in einer festgelegten Ausrichtung zueinander verbunden und gehalten, was vorzugsweise ein orientiertes Anordnen des Anbauteils A zum Strukturbauteil S unterstützt.

Die Dämpfungsschicht 40 ist in einer radialen Dicke derart dimensioniert, dass ein Spalt zwischen der radialen Außenseite 38 des Schafts 32 und der inneren umfänglich umlaufenden Begrenzungswand 22 der Hohlschraube 10 durch die Dämpfungsschicht 40 geschlossen ist. Entsprechend wird die bevorzugt elastisch und/oder plastisch verformbare Dämpfungsschicht 40 in einem Presssitz zwischen der umlaufenden Begrenzungswand 22 und der radialen Außenseite 38 des Schafts 32 gehalten.

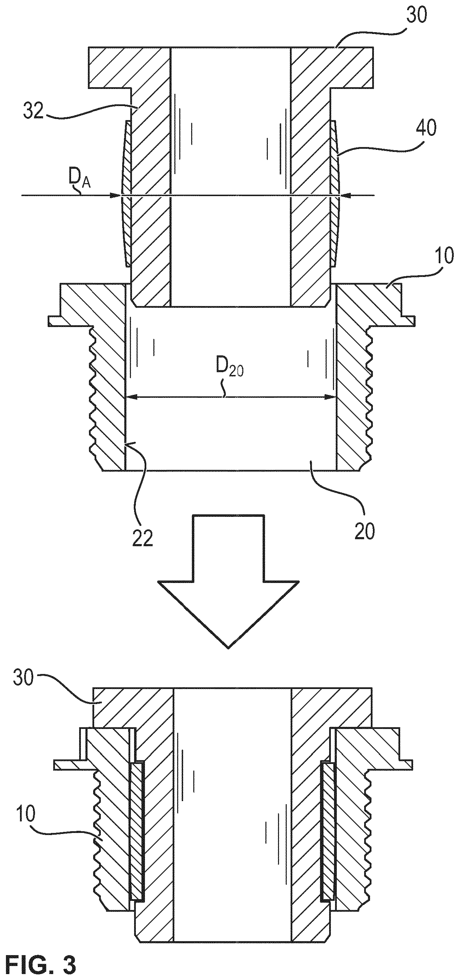

Figur 3 zeigt beispielgebend das Einsetzen der bevorzugten dämpfenden Befestigungshülse 30 gemäß Figur 2 in die rohrförmige Befestigungsöffnung 20 der Hohlschraube 10. Vorzugsweise ist ein Außendurchmesser D_{A} des Schafts 32 mit schwingungsdämpfender Beschichtung 40 größer als ein Innendurchmesser D₂₀ der rohrförmigen Befestigungsöffnung 20. Somit wird die dämpfende Beschichtung 40 nach dem Einsetzen der dämpfenden Befestigungshülse 30 in die rohrförmige Befestigungsöffnung 20 der Hohlschraube 10 in radialer Richtung komprimiert. Durch die bevorzugte Kopplung der Begrenzungswand 22 der Hohlschraube 10 mit dem Schaft 32 über die Dämpfungsschicht 40 wird eine Übertragung von Schwingungen, Schlägen oder Stößen zwischen Anbauteil A und Strukturbauteil S vermindert oder gedämpft und vorzugsweise verhindert.

Ist das Strukturbauteil S beispielsweise Schwingungen S_{R} in radialer Richtung ausgesetzt, übertragen sich diese auf die Befestigungshülse 30. Die umlaufende Begrenzungswand 22 der Hohlschraube 10 stützt sich über die dämpfende Beschichtung 40 radial am Schaft 32 ab. Dadurch werden bevorzugt die Radialschwingungen S_{R} gedämpft oder reduziert und im Optimalfall gar nicht auf die Hohlschraube 10 und das mit ihr verbundene Anbauteil A übertragen.

Gemäß einer weiteren bevorzugten Ausführungsform vorliegender Erfindung ist an der dem Schaft 32 zugewandten Unterseite des Radialkragens 34, also an dessen axialer Außenseite 35, ebenfalls eine Dämpfungsschicht 42 vorgesehen. Die Dämpfungsschicht 42 erstreckt sich bevorzugt teilweise oder vollflächig über die axiale Außenseite 35 des Radialkragens 34.

Sind beispielsweise das Strukturbauteil S und/oder das Anbauteil A Schwingungen S_{A} in axialer Richtung ausgesetzt, dann werden diese vermindert oder gedämpft oder im Idealfall gar nicht auf die benachbarte Komponente Hohlschraube 10 oder Befestigungshülse 30 übertragen.

Gemäß einer weiteren bevorzugten Ausgestaltung vorliegender Erfindung erstreckt sich eine geschlossene Dämpfungsschicht 40, 42 über die radiale Außenseite 38 des Schafts 32 und die axiale Außenseite 35 am Radialkragen 34. Somit gehen vorzugsweise die Dämpfungsschicht 40, 42 ineinander über oder sind als eine Dämpfungsschicht ausgebildet.

Eine weitere bevorzugte Ausführungsform der dämpfenden Befestigungshülse 30 ist in Figur 6 dargestellt. Beginnend an der schaftzugewandten Seite des Radialkragens 34 ist der gesamte Schaft 32 mit einer durchgehenden Dämpfungsschicht 44 ummantelt. In einem axialen Querschnitt entlang der Längsachse L der Befestigungshülse 30 verläuft die durchgehende Dämpfungsschicht 44 bevorzugt wellenförmig. Über die radialen Wellenberge 46 stützen sich bevorzugt die Befestigungshülse 30 und die Hohlschraube 10 und somit das Strukturbauteil S und das Anbauteil A schwingungsdämpfend aneinander ab. Während vorzugsweise die Wellenberge 46 die mechanischen Lasten aufnehmen und verformt werden, dienen die Wellentäler 48 der Aufnahme verdrängten Materials der durchgehenden Dämpfungsschicht 44.

Bevorzugt geht die Dämpfungsschicht 44 von der radialen Außenseite 38 des Schafts 32 in die axiale Außenseite 35 des Radialkragens 34 in Form eines Radius r_{DS} über. Hierbei ist die innenliegende umlaufende Begrenzungswand 22 der Hohlschraube 10 in Richtung des ersten axialen Endes 16 mit einem dazu komplementären Radius R_{Hs} ausgebildet. Dadurch wird eine Art Aufnahmetrichter für die aufzunehmende dämpfende Befestigungshülse 30 gebildet. Diese Ausgestaltung erlaubt es, die radiale Ausdehnung des Radialkragens 34 mit niedrigem Platzbedarf gering zu halten. Dennoch ist mit dieser Ausgestaltung eine hohe Axialkraft von der Befestigungshülse 30 in und auf die Hohlschraube 10 übertragbar. Trotz der verbesserten Kraft- oder Lastübertragungen werden dabei induzierte Spannungen zwischen Hülse 30 und Hohlschraube 10 nur soweit erhöht, dass die Lebensdauer des Verstellelements 1 nicht beeinträchtigt ist.

Vorzugsweise besteht die dämpfende Beschichtung 40,42, 44 aus einem elastischen Material. Entsprechend eignen sich Elastomere oder thermoplastische Elastomere (PPE) oder Styrol Ethylen Buthylen Styrol (SEBS) oder ähnliche.

Um das Anbauteil A, insbesondere eine Griffkonstruktion, ein Spiegel oder eine Fahrzeugleuchte, an einem Strukturbauteil S, insbesondere eine Fahrzeugkarosserie, zu befestigen und zu positionieren, werden bezugnehmend auf die oben beschriebenen konstruktiven Ausgestaltungen folgende Schritte durchgeführt. Zunächst wird bevorzugt die Befestigungsöffnung O im Strukturbauteils S mit einem Gewinde, vorzugsweise mittels einer Schweißmutter oder einer Blindnietmutter, bereitgestellt (S1). Das Gewinde ist passend zu dem Gewindebolzen 90 als Befestigungsmittel ausgebildet ist.

In einem weiteren Schritt wird die Hohlschraube 10 des Verstellelements 1 in eine Halteöffnung des Anbauteils A eingeschraubt (S2). Mit dem Einschrauben wird das Anbauteil A auf dem Verstellelement vorpositioniert. Zu diesem Vorpositionieren ist es bevorzugt nötig, die Hohlschraube 10 zu drehen (S5), so dass das Anbauteil A entlang der Längsachse L der Hohlschraube 10 versetzt wird. Dieses Drehen kann vor oder nach dem Befestigen des Verstellelements 1 am Strukturbauteil S erfolgen.

Mit Hilfe des Befestigungsmittels 90, vorzugsweise ein Gewindebolzen, wird die Hohlschraube 10 mit Anbauteil A an der Öffnung O des Strukturbauteils S befestigt (S4). Das Befestigungsmittel 90 ist dazu bevorzugt innerhalb der rohrförmigen Befestigungsöffnung 36 der dämpfenden Befestigungshülse 30 angeordnet.

Um die Hohlschraube 10 drehbar am Strukturbauteil S anzuordnen, wird vorzugsweise der Gewindebolzen 90 in Kombination mit einer Stützscheibe 80 in der dämpfenden Befestigungshülse 30 angeordnet (S3). Erstreckt sich die Befestigungshülse 30 axial über die Hohlschraube 10 hinaus, ist die Hohlschraube 10 am Strukturbauteil S drehbar befestigt. Endet die Befestigungshülse 30 mit der Hohlschraube 10 muss die axiale Position des Anbauteils A auf der Hohlschraube 10 vor dem Befestigen am Strukturbauteil S erfolgen. Zum Einstellen der axialen Position des Anbauteils A auf der Hohlschraube 10 wird die Hohlschraube 10 über ein äußeres oder ein inneres Antriebsmerkmal gedreht (S6).

Vorliegende Erfindung offenbart zudem ein Spritzgussverfahren, mit dem das Verstellelement 1 herstellbar ist. Es weist die folgenden Schritte auf: Bereitstellen einer Spritzgussform mit den komplementären Formmerkmalen zu dem Verstellelement 1, Spritzgießen der Hohlschraube 10 und der Befestigungshülse 30 mit einem ersten Kunststoff in einem ersten Schuss und Spritzgießen einer elastischen Dämpfungsschicht auf einer äußeren Fläche der Befestigungshülse 30 mit einem zweiten Kunststoff in einem zweiten Schuss, wobei der zweite Kunststoff eine größere Elastizität als der erste Kunststoff aufweist. Zudem ist es bevorzugt, das Spritzgießen der elastischen Dämpfungsschicht auf einer äußeren Mantelfläche der Befestigungshülse 30 oder auf der äußeren Mantelfläche und einer der Mantelfläche zugewandten Seite des Radialkragens der Befestigungshülse 30 durchzuführen.

### 6. Bezugszeichenliste

- 1: Verstellelement
- 10: Hohlschraube
- 11: Antriebsmerkmal
- 12: umlaufende Wand
- 14: radiales Außengewinde der Hohlschraube 10
- 16: erstes axiales Ende
- 18: zweites axiales Ende
- 20: rohrförmige Befestigungsöffnung
- 22: umfänglich umlaufende Begrenzungswand
- 30: dämpfende Befestigungshülse
- 32: Schaft
- 34: Radialkragen
- 35: axiale Außenseite
- 36: Befestigungskanal
- 38: radiale Außenseite
- 40: dämpfende Beschichtung
- 42: Dämpfungsschicht
- 44: durchgehende Dämpfungsschicht
- 46: radiale Wellenberge
- 48: Wellentäler
- 50: Führungsnut zwischen benachbarten Dämpfungsschichten
- 52: Führungssteg an der Hohlschraube
- 90: Gewindebolzen
- 92: Schaft des Gewindebolzens 90
- 94: Gewindeende
- 96: Mutter-Gewinde-Element

- A: Anbauteil
- S: Strukturbauteil
- L: Längsachse der Hohlschraube 10
- Z: Abstand zwischen Anbauteil und Strukturbauteil
- O: Öffnung im Strukturbauteil S
- S_{R}: Schwingungen in radialer Richtung
- S_{A}: Schwingungen in axialer Richtung
- r_{DS}: Radius der Dämpfungsschicht 42 der Befestigungshülse 30
- R_{HS}: Radius der Hohlschraube an der inneren Begrenzungswand
- D_{A}: Außendurchmesser der Dämpfungsschicht
- D₂₀: Innendurchmesser der Hohlschraube 20

## Patentansprüche

1. Ein Verstellelement (1), mit dem eine Komponente (A) befestigbar und im Raum positionierbar ist, das die folgenden Merkmale aufweist:
a. eine hülsenartige Hohlschraube (10) mit einem ersten (16) und einem zweiten axialen Ende (18), einem Antriebsmerkmal (11) und einem Außengewinde (14), an dem eine Komponente (A) haltbar und in axialer Richtung der Hohlschraube (10) positionierbar ist,
b. eine rohrförmige Befestigungsöffnung (20) erstreckt sich zwischen dem ersten (16) und dem zweiten axialen Ende (18) der hülsenartigen Hohlschraube (10),
c. innerhalb der rohrförmigen Befestigungsöffnung (20) ist eine dämpfende Befestigungshülse (30) angeordnet, sodass die Hohlschraube (10) über die Befestigungshülse (30) mit einem Befestigungsmittel (90) an einem Strukturbauteil (A) befestigbar und Schwingungen zwischen dem Strukturbauteil (A) und der Hohlschraube (10) reduzierbar sind.

2. Das Verstellelement (1) gemäß Patentanspruch 1, dessen dämpfende Befestigungshülse (30) an einem ersten axialen Ende einen umlaufenden und auswärtsragenden Radialkragen (34) aufweist, der über einen Innendurchmesser der rohrförmigen Befestigungsöffnung (20) hinausragt, sodass die Befestigungshülse (30) an dem ersten (16) oder zweiten axialen Ende (18) der Hohlschraube (10) axial abstützbar ist.

3. Das Verstellelement (1) gemäß einem der vorhergehenden Patentansprüche, dessen dämpfende Befestigungshülse (30) gemessen ohne Radialkragen (34) länger als die rohrförmige Befestigungsöffnung (20) ausgebildet ist, sodass die Hohlschraube (10) an einem Strukturbauteil (S) an der Befestigungshülse (30) drehbar befestigbar ist.

4. Das Verstellelement (1) gemäß einem der vorhergehenden Patentansprüche, dessen dämpfende Befestigungshülse (30) an einer radial äußeren Mantelfläche eine erste elastische Dämpfungsschicht (40) aufweist, um eine Schwingungsübertragung zwischen der Hohlschraube (10) und der Befestigungshülse (30) zu vermindern.

5. Das Verstellelement (1) gemäß Patentanspruch 4, in dem ein Innendurchmesser der rohrförmigen Befestigungsöffnung (20) kleiner als ein Außendurchmesser der dämpfenden Befestigungshülse (30) mit elastischer Dämpfungsschicht (40) ist, sodass die Befestigungshülse (30) reibschlüssig in der rohrförmigen Befestigungsöffnung (20) gehalten ist.

6. Das Verstellelement (1) gemäß Patentanspruch 4 oder 5 in Kombination mit Patentanspruch 2, dessen Radialkragen (34) an einer dem Schaft (32) der Befestigungshülse (30) zugewandten Seite eine zweite elastische Dämpfungsschicht (42) aufweist, um eine Schwingungsübertragung in axialer Richtung zwischen der Hohlschraube (10) und der Befestigungshülse (30) zu reduzieren.

7. Das Verstellelement (1) gemäß einem der vorhergehenden Patentansprüche, welches über das Befestigungsmittel (90) an einem Strukturbauteil (S) befestigbar ist, dessen Außendurchmesser kleiner ist als ein Innendurchmesser der Befestigungsöffnung (36), um einen radialen Toleranzausgleich zwischen dem Verstellelement (1) und dem Befestigungsmittel (90) zu gewährleisten.

8. Ein Strukturbauteil (S) mit einer Öffnung (O), an der das Verstellelement (1) gemäß einem der vorhergehenden Patentansprüche mit einem Befestigungsmittel (90) befestigt ist.

9. Das Strukturbauteil (S) gemäß Patentanspruch 8, wobei auf dem Außengewinde (14) der Hohlschraube (10) des Verstellelements (1) ein Bauteil (A) derart befestigt ist, dass Toleranzen zwischen dem Strukturbauteil (S) und dem Bauteil (A) einstellbar sind.

10. Ein Installationsverfahren, mit dem ein Anbauteil (A), insbesondere ein Fahrzeuggriff oder eine Leuchte, an einem Strukturbauteil (S), insbesondere eine Fahrzeugkarosserie, befestigbar und positionierbar ist, wobei das Installationsverfahren die folgenden Schritte aufweist:
a. Einschrauben (S2a, S2b) einer Hohlschraube (10) des Verstellelements (1) gemäß einem der vorhergehenden Patentansprüche 1 bis 7 in eine Halteöffnung des Anbauteils (A),
b. Drehen (S5) der am Strukturbauteil (S) befestigten Hohlschraube (10), so dass das Anbauteil (A) entlang einer Längsachse (L) der Hohlschraube (10) versetzt wird, und
c. Befestigen (S4) der Hohlschraube (10) mit Anbauteil (A) an einer Öffnung (O) des Strukturbauteils (S) mit einem Befestigungsmittel (90), das innerhalb der rohrförmigen Befestigungsöffnung (36) der dämpfenden Befestigungshülse (30) angeordnet ist.

11. Das Installationsverfahren gemäß Patentanspruch 10, mit dem weiteren Schritt:
Bereitstellen (S1) der Öffnung (O) des Strukturbauteils (S) mit einem Gewinde, vorzugsweise mittels einer Schweißmutter oder einer Blindnietmutter (C), welches passend zu einem Gewindebolzen (90) als Befestigungsmittel ausgebildet ist.

12. Das Installationsverfahren gemäß einer der vorhergehenden Patentansprüche 10 und 11, mit dem weiteren Schritt:
Anordnen (S3) des Gewindebolzens (90) in Kombination mit einer Stützscheibe (80) in der dämpfenden Befestigungshülse (30), so dass die Hohlschraube (10) am Strukturbauteil (S) drehbar befestigt ist.

13. Das Installationsverfahren gemäß einer der vorhergehenden Patentansprüche 11 und 12, mit dem weiteren Schritt:
Drehen (S6) der Hohlschraube (10) über ein äußeres (11) oder ein inneres Antriebsmerkmal, um die axiale Position des Anbauteils (A) auf der Hohlschraube (10) zu verändern.

14. Ein Spritzgussverfahren, mit dem ein Verstellelement (1) gemäß einem der Patentansprüche 1 bis 7 herstellbar ist, das die folgenden Schritte aufweist:
a. Bereitstellen einer Spritzgussform mit den komplementären Formmerkmalen zu dem Verstellelement (1),
b. Spritzgießen der Hohlschraube (10) und der Befestigungshülse (20) mit einem ersten Kunststoff in einem ersten Schuss und
c. Spritzgießen einer elastischen Dämpfungsschicht auf einer äußeren Fläche der Befestigungshülse (30) mit einem zweiten Kunststoff in einem zweiten Schuss, wobei der zweite Kunststoff eine größere Elastizität als der erste Kunststoff aufweist.

15. Das Spritzgussverfahren gemäß Patentanspruch 14 mit der weiteren Ausgestaltung:
Spritzgießen der elastischen Dämpfungsschicht auf einer äußeren Mantelfläche der Befestigungshülse (30) oder auf der äußeren Mantelfläche (38) und einer der Mantelfläche zugewandten Seite (35) des Radialkragens (34) der Befestigungshülse (30).

## Claims

1. An adjustment element (1) with which a component (A) is fastenable and positionable in the space, comprising the following features:
a. a sleeve-like hollow screw (10) with a first (16) and a second axial end (18), a drive feature (11) and an outer thread (14) at which a component (A) is supportable and positionable in axial direction of the hollow screw (10),
b. a tube-like fastening opening (20) extends between the first (16) and the second axial end (18) of the sleeve-like hollow screw (10),
c. within the tube-like fastening opening (20), a dampening fastening sleeve (30) is arranged so that the hollow screw (10) is fastenable by means of the fastening sleeve (30) with a fastening means (90) to a structural component (A) and vibrations between the structural component (A) and the hollow screw (10) are reducible.

2. The adjustment element (1) according to claim 1, the dampening fastening sleeve (30) of which has a circumferential and outwardly protruding radial collar (34) on a first axial end, with the radial collar (34) projecting beyond an inner diameter of the tube-like fastening opening (20), so that the fastening sleeve (30) is axially supportable on the first (16) or the second axial end (18) of the hollow screw (10).

3. The adjustment element (1) according to one of the preceding claims, whose dampening fastening sleeve (30), measured without radial collar (34), is configured longer than the tube-like fastening opening (20), so that the hollow screw (10) is rotatably fastenable to a structural component (S) at the fastening sleeve (30).

4. The adjustment element (1) according to one of the preceding claims, whose dampening fastening sleeve (30) comprises a first elastic dampening layer (40) on a radially outer lateral surface so as to reduce a vibration transmission between the hollow screw (10) and the fastening sleeve (30).

5. The adjustment element (1) according to claim 4 where an inner diameter of the tube-like fastening opening (20) is smaller than an outer diameter of the dampening fastening sleeve (30) with elastic dampening layer (40), so that the fastening sleeve (30) is held in the tube-like fastening opening (20) in a friction-fit manner.

6. The adjustment element (1) according to claim 4 or 5 in combination with claim 2, whose radial collar (34) comprises a second elastic dampening layer (42) on a side facing the shaft (32) of the fastening sleeve (30) so as to reduce a vibration transmission in axial direction between the hollow screw (10) and the fastening sleeve (30).

7. The adjustment element (1) according to one of the preceding claims, which is fastenable by means of the fastening means (90) to a structural component (S), the outer diameter of which is smaller than an inner diameter of the fastening opening (36) so as to guarantee a radial tolerance compensation between the adjustment element (1) and the fastening means (90).

8. A structural component (S) with an opening (O) to which the adjustment element (1) according to one of the preceding claims is fastened with a fastening means (90).

9. The structural component (S) according to claim 8, wherein a component (A) is fastened on the outer thread (14) of the hollow screw (10) of the adjustment element (1) in a way that tolerances between the structural component (S) and the component (A) are adjustable.

10. An installation method, with which an add-on part (A), in particular a vehicle handle or a light, is fastenable and positionable to a structural component (S), in particular a vehicle body, wherein the installation method comprises the following steps:
a. screwing-in (S2a, S2b) a hollow screw (10) of the adjustment element (1) according to one of the preceding claims 1 to 7 into a supporting opening of the add-on part (A),
b. rotating (S5) the hollow screw (10) which is fastened to the structural component (S) such that the add-on part (A) is displaced along a longitudinal axis (L) of the hollow screw (10) and
c. fastening (S4) the hollow screw (10) with add-on part (A) to an opening (O) of the structural component (S) with a fastening means (90) which is arranged within the tube-like fastening opening (36) of the dampening fastening sleeve (30).

11. The installation method according to claim 10, with the further step:
providing (S1) the opening (O) of the structural component (S) with a thread, preferably by means of a welding nut or a blind rivet nut (C) which is configured so as to match a threaded bolt (90) as the fastening means.

12. The installation method according to one of the preceding claims 10 and 11 with the further step:
arranging (S3) the threaded bolt (90) in combination with a supporting disc (80) in the dampening fastening sleeve (30), so that the hollow screw (10) is rotatably fastened to the structural component (S).

13. The installation method according to one of the preceding claims 11 and 12, with the further step:
rotating (S6) the hollow screw (10) by means of an outer (11) or an inner drive feature so as to change the axial position of the add-on part (A) on the hollow screw (10).

14. An injection molding method with which an adjustment element (1) according to one of the claims 1 to 7 can be produced, the method comprising the following steps:
a. providing an injection mold with the complementary form features with respect to the adjustment element (1),
b. injection molding the hollow screw (10) and the fastening sleeve (20) with a first plastic material in a first injection and
c. injection molding an elastic dampening layer on an outer surface of the fastening sleeve (30) with a second plastic material in a second injection, with the second plastic material having a higher elasticity than the first plastic material.

15. The injection molding method according to claim 14 with the further configuration:
injection molding the elastic dampening layer on an outer lateral surface of the fastening sleeve (30) or on the outer lateral surface (38) and a side (35) of the radial collar (34) of the fastening sleeve (30) which faces the lateral surface.

## Revendications

1. Élément de réglage (1) permettant de fixer un composant (A) et de positionner celui-ci dans l'espace, présentant les caractéristiques suivantes :
a. une vis creuse du genre manchon (10) dotée d'une première (16) et d'une deuxième extrémité axiale (18), d'un élément d'entraînement (11) et d'un filetage extérieur (14), sur lequel un composant (A) peut être maintenu et positionné dans la direction axiale de la vis creuse (10),
b. une ouverture de fixation tubulaire (20) s'étend entre la première (16) et la deuxième extrémité axiale (18) de la vis creuse du genre manchon (10),
c. à l'intérieur de l'ouverture de fixation tubulaire (20) est disposé un manchon de fixation amortissant (30), de telle façon que la vis creuse (10) peut être fixée à un élément de structure (A) par le biais du manchon de fixation (30) à l'aide d'un moyen de fixation (90) et que des oscillations entre l'élément de structure (A) et la vis creuse (10) peuvent être réduites.

2. Élément de réglage (1) selon la revendication 1, dont le manchon de fixation amortissant (30) présente, à une première extrémité axiale, un col radial (34) périphérique et faisant saillie vers l'extérieur, lequel fait saillie au-delà d'un diamètre intérieur de l'ouverture de fixation tubulaire (20), de telle façon que le manchon de fixation (30) peut s'appuyer axialement sur la première (16) ou la deuxième extrémité axiale (18) de la vis creuse (10).

3. Élément de réglage (1) selon l'une des revendications précédentes, dont le manchon de fixation amortissant (30), mesuré sans col radial (34), est conçu plus long que l'ouverture de fixation tubulaire (20), de telle façon que la vis creuse (10) peut être fixée de façon rotative à un élément de structure (S) sur le manchon de fixation (30).

4. Élément de réglage (1) selon l'une des revendications précédentes, dont le manchon de fixation amortissant (30) présente une première couche d'amortissement élastique (40) sur une surface d'enveloppe radialement extérieure, afin d'atténuer la transmission d'oscillations entre la vis creuse (10) et le manchon de fixation (30).

5. Élément de réglage (1) selon la revendication 4, dans lequel un diamètre intérieur de l'ouverture de fixation tubulaire (20) est inférieur à un diamètre extérieur du manchon de fixation amortissant (30) avec une couche d'amortissement élastique (40), de telle façon que le manchon de fixation (30) est maintenu par friction dans l'ouverture de fixation tubulaire (20).

6. Élément de réglage (1) selon la revendication 4 ou 5 en combinaison avec la revendication 2, dont le col radial (34) présente une deuxième couche d'amortissement élastique (42) sur un côté tourné vers l'arbre (32) du manchon de fixation (30), afin de réduire une transmission d'oscillations dans la direction axiale entre la vis creuse (10) et le manchon de fixation (30).

7. Élément de réglage (1) selon l'une des revendications précédentes, lequel peut être fixé, par le biais du moyen de fixation (90), à un élément de structure (S) dont le diamètre extérieur est inférieur au diamètre intérieur de l'ouverture de fixation (36), afin de garantir une compensation de tolérance radiale entre l'élément de réglage (1) et le moyen de fixation (90).

8. Élément de structure (S) doté d'une ouverture (O), à laquelle l'élément de réglage (1) selon l'une des revendications précédentes peut être fixé à l'aide d'un moyen de fixation (90).

9. Élément de structure (S) selon la revendication 8, dans lequel un élément (A) peut être fixé au filetage extérieur (14) de la vis creuse (10) de l'élément de réglage (1) de telle façon que des tolérances entre l'élément de structure (S) et l'élément (A) peuvent être réglées.

10. Procédé d'installation permettant de fixer et de positionner un élément rapporté (A), en particulier une poignée de véhicule ou une lampe, sur un élément de structure (S), en particulier une carrosserie de véhicule, dans lequel le procédé d'installation présente les étapes suivantes :
a. vissage (S2a, S2b) d'une vis creuse (10) de l'élément de réglage (1) selon l'une des revendications précédentes 1 à 7 dans une ouverture de maintien de l'élément rapporté (A),
b. rotation (S5) de la vis creuse (10) fixée à l'élément de structure (S), de manière à déplacer l'élément rapporté (A) le long d'un axe longitudinal (L) de la vis creuse (10), et
c. fixation (S4) de la vis creuse (10) avec l'élément rapporté (A) à une ouverture (O) de l'élément de structure (S) à l'aide d'un moyen de fixation (90), lequel est disposé à l'intérieur de l'ouverture de fixation tubulaire (36) du manchon de fixation amortissant (30).

11. Procédé d'installation selon la revendication 10, comprenant l'étape supplémentaire suivante :
mise à disposition (S1) de l'ouverture (O) de l'élément de structure (S) avec un filetage, de préférence au moyen d'un écrou à souder ou d'un écrou borgne à riveter (C), lequel est conçu de manière à correspondre à un boulon fileté (90) en tant que moyen de fixation.

12. Procédé d'installation selon l'une des revendications précédentes 10 et 11, comprenant l'étape supplémentaire suivante :
agencement (S3) du boulon fileté (90) en combinaison avec un disque d'appui (80) dans le manchon de fixation amortissant (30), de manière à fixer la vis creuse (10) de façon rotative à l'élément de structure (S).

13. Procédé d'installation selon l'une des revendications précédentes 11 et 12, comprenant l'étape supplémentaire suivante :
rotation (S6) de la vis creuse (10) par le biais d'un élément d'entraînement extérieur (11) ou intérieur, afin de modifier la position axiale de l'élément rapporté (A) sur la vis creuse (10).

14. Procédé de moulage par injection permettant de fabriquer un élément de réglage (1) selon l'une des revendications 1 à 7, présentant les étapes suivantes :
a. mise à disposition d'un moule à injection avec les attributs de moule complémentaires à l'élément de réglage (1),
b. moulage par injection de la vis creuse (10) et du manchon de fixation (20) avec une première matière plastique dans un premier jet et
c. moulage par injection d'une couche d'amortissement élastique sur une surface extérieure du manchon de fixation (30) avec une deuxième matière plastique dans un deuxième jet, la deuxième matière plastique présentant une plus grande élasticité que la première matière plastique.

15. Procédé de moulage par injection selon la revendication 14, comprenant le mode de réalisation supplémentaire suivant :
moulage par injection de la couche d'amortissement élastique sur une surface d'enveloppe extérieure du manchon de fixation (30) ou sur la surface d'enveloppe extérieure (38) et sur un côté (35) du col radial (34) du manchon de fixation (30) tourné vers la surface d'enveloppe.
